# EUROPÄISCHE PATENTSCHRIFT

(11) **EP 0 350 809 B1**
(45) Veröffentlichungstag und Bekanntmachung des Hinweises auf die Patenterteilung: **24.11.1993**
(21) Anmeldenummer: 89112445.5
(22) Anmeldetag: 07.07.1989
(51) Int. Cl.: B62D 6/00, B62D 7/02

(54) **Lenkachsenregelung**
Steered axle regulating
Réglage de l'axe de braquage

(30) Priorität: 11.07.1988 DE 3823413
(43) Veröffentlichungstag der Anmeldung: 17.01.1990
(73) Patentinhaber: ROBERT BOSCH GMBH, 70442 Stuttgart (DE)
(72) Erfinder: Walter, Heinz, D-7255 Rutesheim (DE); Meeuwisse, Rochus, D-7140 Ludwigsburg-Hoheneck (DE)

(56) Entgegenhaltungen:
- EP-A- 0 053 297
- EP-A- 0 071 909
- EP-A- 0 093 416
- DE-A- 2 915 070
- DE-A- 3 300 640
- DE-A- 3 338 702
- DE-A- 3 504 561
- US-A- 4 077 490
- US-A- 4 212 366

## Beschreibung

### Stand der Technik

Die Erfindung betrifft eine Lenkachsenregelung für Fahrzeuge mit einer oder mehreren elektro-hydraulisch geregelten Lenkachsen.

Geregelte Lenkachsen werden in bemannten oder unbemannten Transportsystemen, z.B. induktiv arbeitenden Fahrzeugführungssystemen verwendet, wie bei Staplern mit Elektro- oder Dieselmotorantrieb oder bei Transportfahrzeugen und Plattformen für große Lasten, Fertigungs- und Lagersystemautomatisierung, Container-Umschlagbereiche und unbemannte Transportgeräte in Gefahrenbereichen.

Es sind bereits energiesparende Systeme für das gleichzeitige Fernsteuern oder Regeln einer oder mehrerer Lenkachsen bekannt, die in Verbindung mit Proportionalventilen eine Anpassung des Systemdrucks an den auftretenden Lastdruck in den einzelnen Lenkkreisen, bei mehreren Achsen an den höchsten auftretenden Lastdruck, erreichen. Diese Technik ist unter der Bezeichnung LS-Technik (hydraulische Load-Sensing) bekannt.

Dazu werden einfach die Lastdrücke in den einzelnen Lenkkreisen mittels Drucksensoren oder einem Drucksensor und Logikventile gemessen. Das dabei höchste, auftretende hydraulische Lastdrucksignal wird zur Ansteuerung eines Proportional-Druckventils verwendet, das zur Steuerung des Systemdrucks dient. Bei hohen Lastdrücken wird dadurch der Systemdruck angehoben bzw. bei weniger hohen Lastdrücken der Systemdruck zum Zwecke der Energieeinsparung abgesenkt.

Für genaue und dynamisch hochwertige Achsregelungen mit Regel- oder Servoventilen sind rein hydraulische LS-Schaltungen zur Steuerung des Systemdrucks aufwendig, wobei der Aufwand überproportional mit der Achsenanzahl steigt. Aus Steifigkeits-, Stabilitäts- und Dynamikgründen sind rein hydraulische LS-Schaltungen weitgehend ungeeignet. Eine Berücksichtigung weiterer Randbedingungen, die zu Energieeinsparungen führen können, ist mit vertretbarem Aufwand nicht realisierbar.

Ferner ist aus der Zeitschrift "fluid", Juli 1985, Seite 19 ein Allrad-Proportional-Lenkantrieb für einen Stapler bekannt, der mit einem rein hydraulischen LS-System mit Rückschlagventilen, Signalleitungen und mit Druckwaage arbeitet. Zudem sind dort die Lenkantriebe in einen elektrohydraulischen Lageregelkreis geschaltet. Trotz des hohen Aufwandes eignet sich dieser Lenkantrieb wegen der hydraulischen LS-Schaltung nicht für eine hochwertige Lenkachsenregelung.

Weiterhin ist aus der US-PS 4 077 490 für einen Traktor mit vollhydraulischem Fahrantrieb eine Lenkeinrichtung bekannt, bei der die Vorderräder in einen elektrohydraulischen Lageregelkreis geschaltet sind, während die verstellbaren Hydromotoren zum Antrieb der Hinterräder in elektrohydraulischen Geschwindigkeits-Regelkreisen liegen, die vom Lenkungssignal im Sinne einer Lenkbremsung durch die Hinterräder beeinflußbar sind. Abhängig von einem Lenkfehlersignal der Vorderräder können beide Seiten des Lenkzylinders zum Tank entlastet werden, so daß die sonst lenkbaren Vorderräder frei beweglich sind und der Lenkbewegung des Traktors folgen, die durch die Differenzgeschwindigkeit der antreibenden Hinterräder gesteuert wird. Für eine genaue und hochdynamische Allrad-Lenkeinrichtung ist diese Traktor-Lenkeinrichtung nicht geeignet.

### Vorteile der Erfindung

Mit der elektro-hydraulischen Lenkachsenregelung mit den Merkmalen des Anspruchs 1 wird eine einfache, hydraulische Steuerung mit Proportional- und vor allem Regel- oder Servoventilen realisiert, die dem Energieeinsparungsgesichtspunkt dadurch gerecht wird, daß LS-ähnliche Maßnahmen auf der Elektronikseite eingesetzt werden, um so zusammen mit einem Proportional-Druckventil im Hydraulikkreis eine weitgehende Lastanpassung zu erreichen. Es wird somit eine elektrische Load-Sensing-Schaltung (ELS) zur Reduzierung von Energieverlusten verwendet. Diese Lösung kommt mit einem Minimum an Hydraulikelementen aus und ist dementsprechend kostengünstiger.

Die Lenkgenauigkeit ist bestimmbar zum einen durch die eingesetzte Ventilqualität beim hydraulischen Achsregler. Dies können z.B. sein
a) einfachste Ausführung mit 4/3 Proportional-Wegeventil mit ca. 20 % Überdeckung,
b) wie bei a) jedoch Ventil mit lagegeregeltem Schieber,
c) Regel- oder Servoventil mit nahezu Null-Überdeckung,
d) wie c) jedoch mit Null-Überdeckung.

Ventile nach c) und d) mit lagegeregeltem Schieber.

Weiter ist die Lenkgenauigkeit bestimmbar durch das Load-Sensing-Signal U_{ELS} für das Druckniveau bzw. die Höhe des Systemdrucks. Dieses Load-Sensing-Signal wird gebildet bzw. ermittelt aus der Lenkabweichung bzw. der Lage-Regelabweichung. Bei mehreren Lenkachsen wird zweckmäßig die größte Lenkabweichung dazu ausgewählt. In bevorzugten, weiterführenden Ausgestaltungen der Erfindung wird das aus der Lenkabweichung ermittelte Signal additiv bei Bedarf um ausgewertete Fahrzustandsdaten, die beispielsweise in einem Lenkdruck-Kennfeld abgelegt sind, ergänzt. Weiter besteht die Möglichkeit einer additiven Ergänzung um ausgewertete Belastungsdaten des Fahrzeugs, die von unterschiedlichen Beladezuständen herrühren. Zudem kann das Systemdruckniveau absichtlich für extreme Genauigkeitsforderungen in Teilbereichen der Anwendungen angehoben werden. Das gebildete Summensignal wird zweckmäßig anschließend noch dynamisch bewertet.

Das erfindungsgemäße, elektrische Load-Sensing-System (ELS) bietet die höchste Regelgüte und Dynamik pro Achse, wenn Regel- oder Servoventile eingesetzt werden. Dabei sind die Achsen hydraulisch eingespannt mit z.B. 50 % zu 50 % des Systemdrucks. Bei diesen Gegebenheiten versagt eine rein hydraulische Load-Sensing-Einrichtung. Beim erfindungsgemäßen, elektrischen Load-Sensing-System wird dagegen der Lenkfehler und ggf. die Fahr- und Belastungszustände festgestellt und danach der Systemdruck bestimmt.

Beim elektrischen Load-Sensing-System werden die elektrischen Achsregler so optimiert, daß die höchste Kreisverstärkung/Regelgüte pro Achse bei minimaler Dämpfung des Antriebs und maximalem Druckabfall am Regelventil berücksichtigt wird. Durch Zurücknahme des Systemdrucks über das Load-Sensing-Signal verringert sich die Kreisverstärkung um den Druckabfall am Ventil. Die Stabilität erhöht sich, die Steifigkeit pro Achse läßt im zulässigen Rahmen nach und Energie wird eingespart, d.h. Energieverluste werden auf ein Minimum reduziert. Da dies auf elektronischer Basis erfolgt, kann es jederzeit entsprechend den Randbedingungen angehoben werden. Bei einer rein hydraulischen Load-Sensing-Einrichtung ist dies nicht realisierbar.

### Zeichnung

Ausführungsbeispiele der Erfindung sind in der Zeichnung dargestellt und werden in der nachfolgenden Beschreibung näher erläutert.

Es zeigen:
- Figur 1: eine schematische Darstellung eines elektro-hydraulischen Achsreglers,
- Figur 2: einen Hydraulikantrieb mit Konstant-Pumpe,
- Figur 3: einen Hydraulikantrieb mit Verstellpumpe,
- Figur 4: eine schematische Darstellung des gesamten Lenksystems mit Konstant-Pumpe,
- Figur 5: eine Darstellung entsprechend Figur 4 jedoch mit einer Verstellpumpe,
- Figur 6: eine Darstellung der Verknüpfung der Korrektursignale für den Systemdruck,
- Figur 7: eine Darstellung eines Lenkdruck-Kennfelds mit den Einflüssen von Lenkfehlern und Lastzustandsänderungen,
- Figur 8: eine Darstellung über die Änderung des Systemdrucks bei unterschiedlichen Lenkfehlern.

### Beschreibung der Ausführungsbeispiele

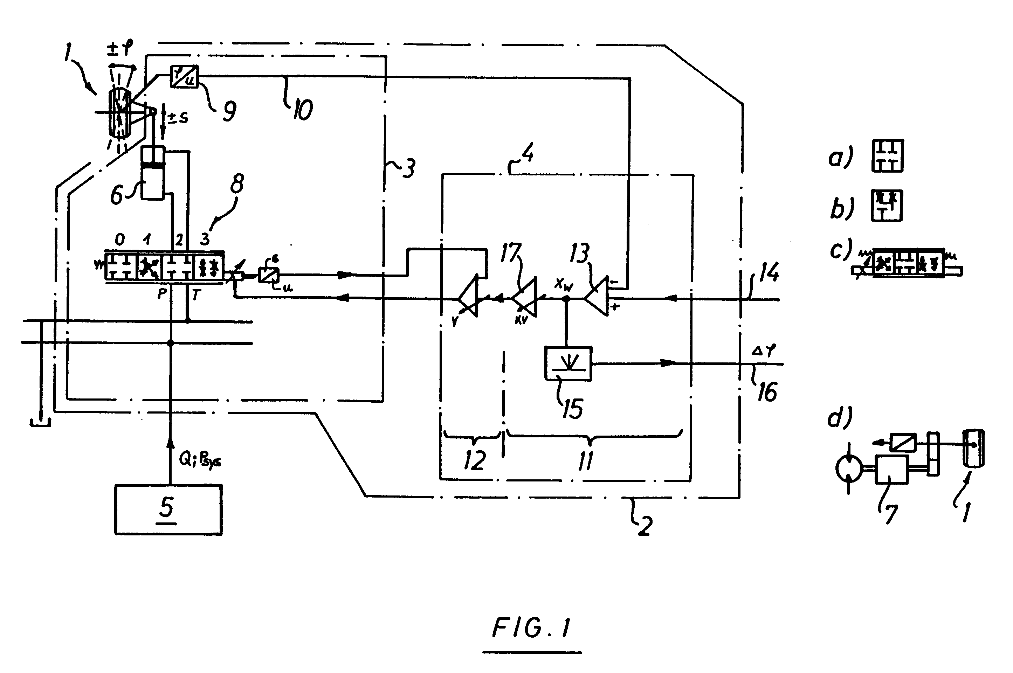

In Figur 1 ist eine Lenkachse 1, deren Lenkwinkel +/- φ über einen elektro-hydraulischen Achsregler geregelt wird.

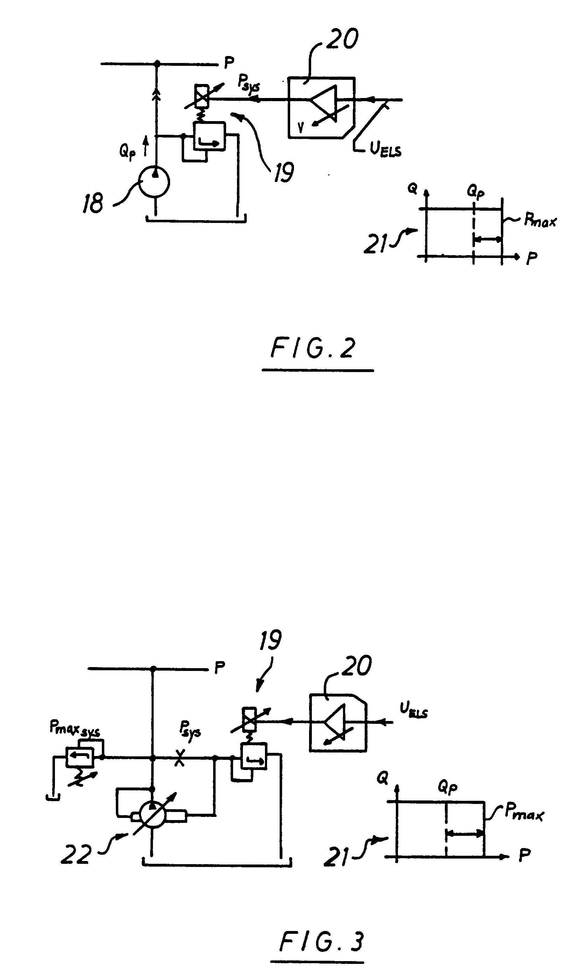

Der elektro-hydraulische Achsregler besteht aus einer hydraulischen Achssteuerung 3, einem elekrischen Achsregler 4 und einem Hydraulik-Antrieb 5. Der Hydraulik-Antrieb 5 ist in zwei Varianten in Verbindung mit den Figuren 2 und 3 näher erläutert und dient zur Versorung eines oder mehrerer elektrohydraulischer Achsregler.

Die hydraulische Achssteuerung 3 enthält ein Antriebselement als beidseitig beaufschlagbaren Hydraulikzylinder 6, der über den Weg +/- s die Winkelverstellung der Lenkachse 1 bewirkt. Alternativ können auch andere Antriebselemente wie Hydraulikmotoren mit oder ohne Getriebeübersetzungen oder Schwenkantriebe mit oder ohne zusätzliche Übersetzungen verwendet werden. Dazu ist beispielsweise unter d) eine Ausführung mit Motor schematisch dargestellt, in der wiederum die Lenkachse 1 und eine Übersetzung 7 erkennbar ist.

Weiter enthält die hydraulische Achssteuerung ein Regelventil 8, an das einerseits der Hydraulikzylinder 6 und andererseits der Hydraulik-Antrieb 5 angeschlossen sind.

An der Lenkachse 1 oder ggf. an ihrem Antrieb ist ein Lagesensor 9 bzw. Winkelsensor zur Ermittlung der Lage der Lenkachse angebracht, der ein entsprechendes elektrisches Lagesignal über die Leitung 10 an den elektrischen Achsregler 4 gibt.

Der elektrische Achsregler 4 enthält einen Lageregler 11 für das Antriebselement bzw. das Ventil 8 und einen Ventilverstärker 12. Der Lageregler 11 enthält einen elektrischen Reglerbaustein 13, dem das Lage-Istwertsignal der Lenkachse 1 über die Leitung 10 und über die Leitung 14 ein Lage-Sollwert-Signal bzw. Winkel-Sollwert-Signal zugeführt wird. Nach dem Reglerbaustein 13 stellt die Lage-Regelabweichung als Signal x_{w} zur Verfügung. Dieses Signal wird einerseits einer betragsbildenden Einheit 15 zugeführt, an dessen Ausgang somit der Betrag als Lenkfehler Δ φ an einer Ausgangsleitung 16 für eine weiter unten beschriebene Weiterverarbeitung zur Verfügung steht.

Andererseits wird das Signal x_{w} zur Lageregelung des Antriebselements bzw. des Ventilschiebers des Regelventils 8 an den Ventilverstärker 12 geleitet, wobei auch hier eine Lagerückführung verwendet ist.

Die dargestellte Anordnung hat folgende Funktion:
Der Lage- oder Stellungs-Istwert der Lenkachse 1 wird über den Lage- (oder Winkel-)Sensor 9 erfaßt und über die Leitung 10 dem Lageregler 11 zugeführt. Aus dem über die Leitung 14 anliegenden Lage- (oder Winkel-)Sollwert und dem Istwert wird die Lage-Regelabweichung x_{w} im Reglerbaustein 13 gebildet.

Die Betragsauswertung dieser Lage-Regelabweichung x_{w} erfolgt im Betragsbildner 15. Dessen Ausgangssignal an der Leitung 16 stellt den Lenkfehler Δ φ dar, der im wesentlichen zur Bestimmung des Load-Sensing-Signals und zur Veränderung des Systemdrucks herangezogen wird.

Weiter wird die Lage-Regelabweichung x_{w} einem Lagereglerbaustein 17 zugeführt, der dieses Signal verstärkt und mit einem bestimmten Übertragungsverhalten, z.B. einem Proportionalverhalten, versieht und es als Stellgröße dem Ventilverstärker 12 zuführt. Der Ventilverstärker enthält auch den Leistungsverstärker und bei lagegeregelten Ventilausführungen, wie dargestellt, auch den Lageregler für das Ventil.

Die zugeführte Stellgröße ergibt somit eine proportionale Auslenkung bzw. Verstellung des Ventils 8. Durch die Ventilauslenkung erfolgt die gewünschte Verstellung des Hydraulikzylinders 6 als Antriebselement und damit eine Verstellung der Lenkachse 1.

Sind der vorgegebene Lage-Sollwert und Lage-Istwert gleich, wird die Lage-Regelabweichung x_{w} zu Null und der Hydraulikzylinder 6 als Antriebselement wird in der erreichten Position hydraulisch eingespannt gehalten. Größe und Polarität (+, -) der Regelabweichung bestimmen die einzelnen Ventilstellungen (z.B. 1 bis 3) und damit auch die Bewegungsrichtung des Antriebselementes.

Die fail-safe Stellung, d.h. die Ventilstellung bei Spannungsausfall, Kabelbruch, z.B. am Ventil-Lagesensor, etc. kann abhängig von Ventiltyp unterschiedlich sein.

Bei dem dargestellten 4/4-Regelventil ist die fail-safe Stellung "0". Sie kann wie unter a) und b) skizziert ausgeführt sein. b) ist für Anwendungen, wenn keine äußeren Kräfte auf das Antriebselement in der fail-safe Stellung wirken. Beim Einsatz von Servoventilen (meist 4/3-Ventilausführungen) kann entsprechend der Darstellung nach c) auch die Position "2" die fail-safe Stellung darstellen. Beim Einsatz von 4/3-Proportionalventilen mit oder ohne Lageregelung des Ventilschiebers sind in Mittelstellung des Ventils, die hier der fail-safe Stellung entspricht, sämtliche Anschlüsse (A, B, P, T) gesperrt.

In den Figuren 2 und 3 ist jeweils ein Hydraulik-Antrieb für eine oder mehrere Lenkachsen dargestellt.

In Figur 2 ist eine Ausführung mit einer Konstant-Pumpe sowie mit einem Proportionaldruckventil ohne Lageregelung und direkt gesteuert dargestellt. Im einzelnen besteht das System aus einer Pumpe 18 mit konstantem Förderstrom. Als Pumpe können eine Zahnrad- oder Flügelzellenpumpe sowie andere an sich bekannte Pumpenausführungen verwendet sein. Weiter enthält das System mit Konstantpumpe ein elektrisch ansteuerbares Druckventil als Proportionaldruckventil 19, das in Abhängigkeit vom angelegten Spannungs- oder Strom-Sollwert seinen Einstelldruck ändert. Es sind Ausführungen als direkt- oder vorgesteuertes Ventil abhängig vom maximalen Volumenstrom der Pumpe und mit/ohne Lageregelung für das Magnetstellsystem verwendbar. Dem Druckventil 19 ist ein Ventilverstärker 20 vorgeschaltet, dem am Eingang das Load-Sensing-Signal U_{ELS} als Sollwert-Signal für das Druckventil 19 zugeführt wird. Zusätzlich ist das Kennfeld 21 zwischen Volumenstrom Q und Druck P dargestellt.

Eine alternative Ausführungsform des Hydraulikantriebs 5 für 1 bis n Achsen ist in Figur 3 als System mit Verstellpumpe dargestellt. Auch hier wird einem Ventilverstärker 20 das Signal U_{ELS} als Ventil-Sollwert-Signal zugeführt. Dem Ventilverstärker 20 ist ebenfalls das elektrisch ansteuerbare Druckventil 19 nachgeschaltet. Als Pumpe ist eine Verstellpumpe 22 eingesetzt mit ansteuerbarer Druckregler-Funktion, z.B. als einfacher, ansteuerbarer Druckregler, kombinierter Druck-Stromregler, etc.

Die in den Figuren 2 und 3 dargestellten Hydraulik-Antriebe 5 haben folgende Funktion:
Abhängig vom angelegten Sollwert entsprechend U_{ELS} am Ventilverstärker 20 ändert sich der Druckeinstellwert am Proportional-Druckventil 19 und damit der Systemdruck P_{sys}. Der Systemdruck P_{sys} ist somit eine Funktion des elektrischen Load-Sensing-Signals U_{ELS}.

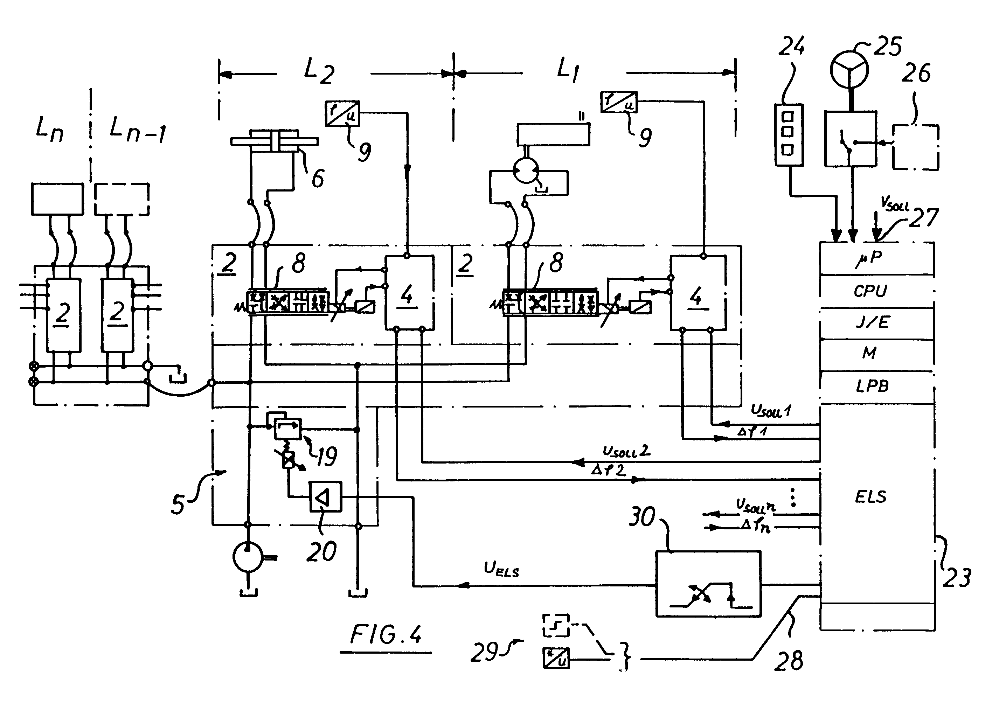

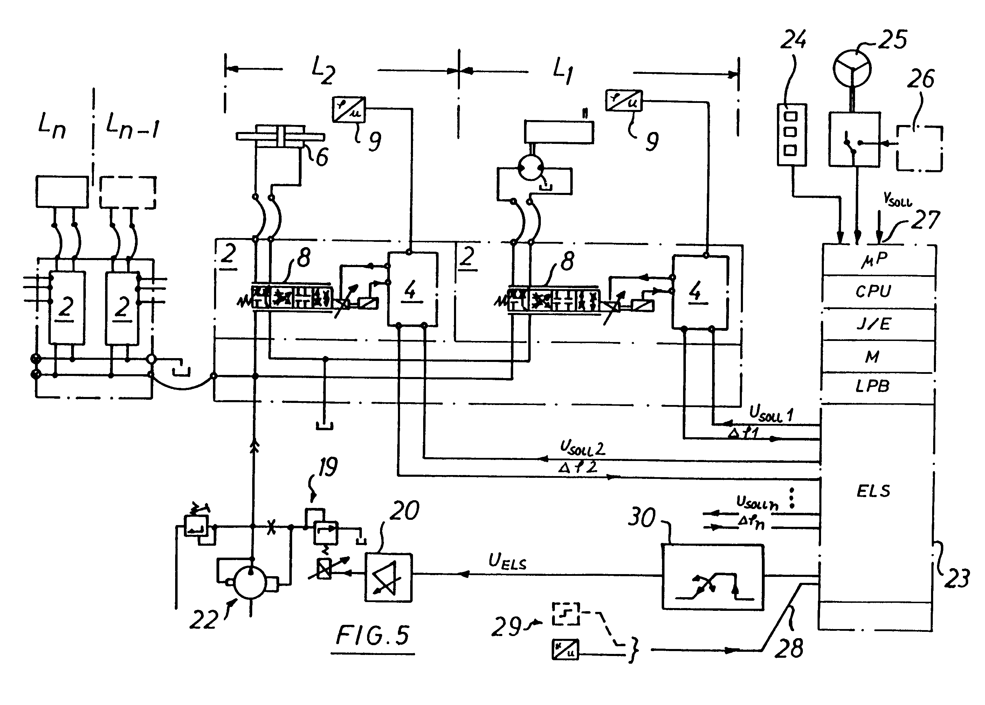

In den Figuren 4 und 5 ist das gesamte Lenksystem jeweils schematisch dargestellt. Figur 4 enthält eine Konstant-Pumpenausführung entsprechend Figur 2, Figur 5 enthält eine Verstellpumpenausführung entsprechend Figur 3.

In den Figuren 4 und 5 ist je das gesamte Lenksystem für 1 bis n Lenkachsen gezeigt, wobei die elektro-hydraulischen Achsregler 2 jeweils nur für die erste Lenkachse L₁ und die zweite Lenkachse L₂ ausführlicher dargestellt ist und die entsprechenden Anordnungen für die Lenkachsen bis Lₙ und Lₙ₋₁ nur angedeutet sind.

Sowohl beim elektro-hydraulischen Achsregler 2 für die Lenkachse L₁ und L₂ sind die angeschlossenen Lagesensoren 9 zur Ermittlung der Lage-Istwerte, die elektrischen Achsregler 4 mit den nachgeschalteten Regelventilen 8 und die angeschlossenen Antriebselemente zu erkennen. Bei der Lenkachse L₁ ist als Antriebselement ein Motorantrieb und für die Lenkachse L₂ ein Hydraulikzylinder 6 für die Verstellung der Achse verwendet. Die Ausgänge für die jeweilige Lenkabweichung Δ φ von den elektrischen Achsreglern sind einer Rechnereinheit 23 zugeführt, die andererseits auch die Lage-Sollwerte U_{Soll L1} bis U_{Soll n} zur Verfügung stellt. An die Rechnereinheit 23 sind eine Reihe von Eingabegrößen angeschlossen. Dies sind insbesondere zur Vorgabe des Lenkwinkeleinschlags des gesamten Fahrzeugs ggf. umschaltbar eine Einheit 24 zur Vorgabe von Lenkprogrammen und/oder ein Lenkrad 25 zur Vorgabe eines Lenkwinkeleinschlags und/oder ein Fahrzeugführungssystem 26.

Weiter wird die Fahrzeuggeschwindigkeit am Eingang 27 der Rechnereinheit 23 zugeführt. Diese Fahrzeuggeschwindigkeit kann entweder gemessen werden oder bevorzugt bei einem Fahrzeugantrieb über Elektromotoren als Signal für die Sollwert-Vorgabe für den Elektromotor auch an der Rechnereinheit 23 anliegen. Die Fahrzeugfahrgeschwindigkeit ist, wie weiter unten dargestellt wird, für die Lenkkraftbedarfserkennung wesentlich.

Weiter wird der Rechnereinheit 23 ein Signal über eine Leitung 28 zugeführt, das den Lastzustand des Fahrzeugs bzw. dessen Beladung angibt. Hierzu kann eine Messung des Lastzustandes des Fahrzeugs über Kraft- oder Drucksensoren 29 erfolgen die analog oder digital, z.B. als stufige Lastmessung, arbeiten können.

Die Rechnereinheit 23 gibt nach der weiter unten dargestellten Verarbeitung auch das elektrische Load-Sensing-Signal U_{ELS}, das über eine Rampenfunktionseinheit 30 dynamisch verarbeitet wird als Sollwert an den Ventilverstärker 20 des jeweiligen Hydraulikantriebs aus, wie dies im Zusammenhang mit den Figuren 2 und 3 erläutert wurde.

Die Rechnereinheit 23 besteht im wesentlichen aus einem Mikroprozessor µ P mit einer Zentraleinheit CPU einer Ein-/Ausgabe-Einheit I/E, Speicher M, einer Lenkprogrammberechnung LPB der elektrischen Load-Sensing-Einheit ELS und weiterer Überwachungs- und ggf. sonstiger Funktionen. Die elektrische Load-Sensing-Einheit umfaßt die Lenkfehler-Erfassung und Auswertung; eine Auswertung gemäß auftretender Lastzustände; eine Speicherung und Verarbeitung eines Lenkkraft-Kennfelds; und eine Berechnung des erforderlichen Systemdrucks einschließlich dessen Dynamik in der Rampenfunktionseinheit 30.

Der Aufbau ist so durchgeführt, daß bei einem Lenksystem mit Konstant-Pumpe gemäß Figur 4 die Regelventile 8 für jeweils zwei Achsen sowie das Proportionaldruckventil 19 in einem Steuerblock kompakt zusammengefaßt sind. Anordnungen für weitere Achsen sind jeweils in Zweiergruppen zusammengefaßt und beinhalten nur die zwei Regelventile, wie dies beispielsweise im Zusammenhang mit den Achsen Lₙ und Lₙ₋₁ dargestellt ist. Der Hydraulik-Antrieb 5 versorgt, wie ausgeführt, alle Achsen.

Bei einem Lenksystem mit Verstellpumpe gemäß Figur 5 sind zweckmäßig die Regelventile 8 jeweils für zwei Achsen kompakt in einem Steuerblock zusammengefaßt. Das Proportionaldruckventil 19 ist der Verstellpumpe 22 zugeordnet und auch dort installiert.

Das in Figur 4 bzw. Figur 5 dargestellte Lenksystem hat folgende Funktion:
Entsprechend den eingegebenen Lenkwinkel-Sollwerten über ein Lenkprogramm, einen Lenkwinkeleinschlag am Lenkrad oder durch Vorgaben eines Fahrzeugführungssystems werden die Lage-Sollwerte (Leitung 14) für die einzelnen Achsen des Fahrzeugs in der Rechnereinheit 23 berechnet. Die berechneten Werte für die einzelnen Achsen gehen als Sollwert-Signale U_{Soll 1} bis U_{Soll n} zu den entsprechenden Achsreglern, die entsprechend diesen Sollwertsignalen die zugeordneten Regelventile ansteuern. Bei ausreichendem Systemdruck (P_{sys} > P_{Last} + Δ Pᵥₑₙₜᵢₗ) folgen die einzelnen Antriebselemente für die Lenkachsen und damit die einzelnen Achsen synchron der Regelventil-Auslenkung (Regelkreisdynamik vernachlässigt).

Reicht dagegen der Systemdruck nicht aus, die einzelnen Achsen zu verstellen, so stellt sich eine Lage-Regelabweichung ein, den jeder der elektrischen Achsregler in seiner Betragshöhe als Lenkabweichung Δ φ ermittelt und der Rechnereinheit 23 zurückmeldet. Ein in der Rechnereinheit 23 enthaltenes elektrischen Load-Sensing-Programm wertet die Lenkabweichung Δ φ aus und erzeugt ein dynamisch bewertetes Ausgangssignal U_{ELS} zur Ansteuerung des Proportional-Druckventilverstärkers 20. Das Proportionaldruckventil 19 erhöht entsprechend diesem Sollwert seinen Einstelldruck und damit auch den Systemdruck P_{sys}. Reicht der Systemdruck nunmehr aus, die Achse zu verstellen, so ergibt sich am entsprechenden Achsregler ein Regelfehler Δ φ = 0 bzw. ein Wert, der innerhalb einer zugelassenen Toleranz liegt.

In einer einfachsten Ausführungsform wird dazu von einem konstanten Grundsystemdruck ausgegangen, der etwa dem minimalen auftretenden Lenkdruck entspricht und eine Erhöhung des Systemdrucks nur entsprechend der Regelabweichung Δ φ durchgeführt.

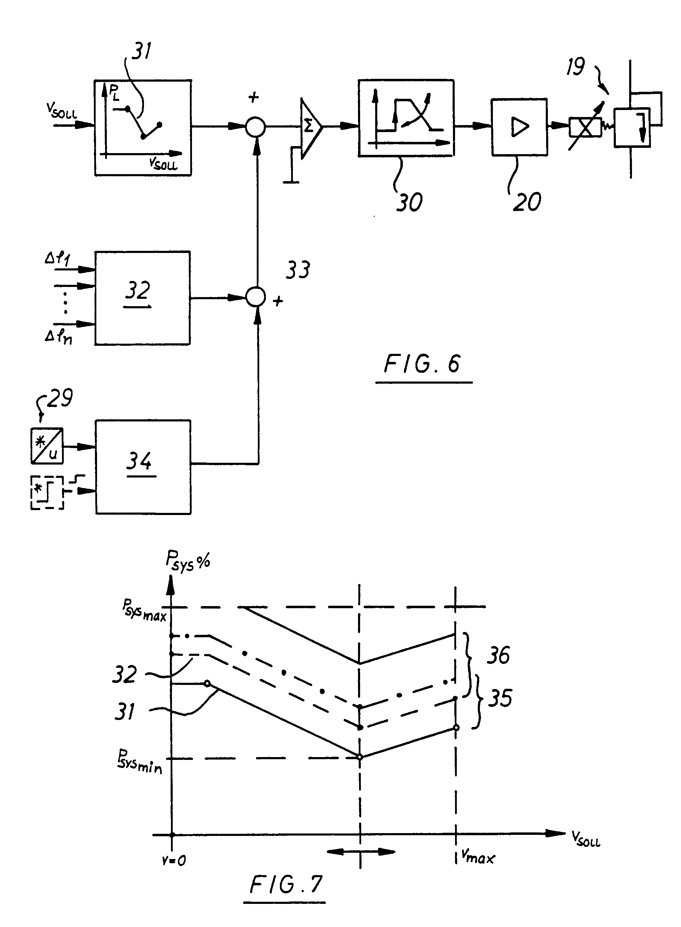

Eine Verbesserung der Regelung, insbesondere deren Dynamik, wird erreicht, wenn weitere Randbedingungen als Korrekturgrößen zur Erhöhung des Systemdrucks mit herangezogen werden:
Der Lenkkraftbedarf einer gelenkten Achse ist für bestimmte Raddurchmesser und bestimmter Bereifung, ähnliche Bodenverhältnisse und konstanter Beladung des Fahrzeugs eine Funktion der jeweiligen Fahrzeuggeschwindigkeit. Für kleine Geschwindigkeiten ist ein hoher Lenkkraftbedarf erforderlich, der sich mit zunehmender Geschwindigkeit bis zu einem minimalem Wert verringert und danach bis zur maximalen Geschwindigkeit des Fahrzeugs, bedingt durch Massenträgheiten des drehenden Rades wieder leicht ansteigt. Aus diesem grundsätzlichen Verlauf des Lenkkraftbedarfs läßt sich in Verbindung mit den eingesetzten Antriebselementen für die Lenkachsen das erforderliche Lenkdruck-Kennfeld 31 nach Figur 6 und Figur 7 ableiten und abspeichern. Der erforderliche Lenkdruck ist somit eine Funktion der Fahrzeuggeschwindigkeit.

Für die Fahrzeuggeschwindigkeit kann entweder die tatsächliche Geschwindigkeit über eine Messung verwendet werden oder, falls vorhanden, ein Sollwert für die Fahrzeuggeschwindigkeit, wie beispielsweise bei E-Motorantrieben, herangezogen werden.

Dabei sind zwei Zustände für die Systemdruckhöhe zu berücksichtigen
a) Bei einem Fahrzeug ohne Lenk- und Fahrauftrag ist die Pumpe ausgeschaltet bzw. falls die Pumpe über einen Elektromotor angetrieben wird, ist dieser Motor ausgeschaltet. Dabei soll der Systemdruck P_{sys} = 0 sein, d.h. der Sollwert für das Proportional-Druckventil 19 soll ebenfalls Null sein.
b) Bei einem Fahrzeug mit Lenk- und/ohne Fahrauftrag soll sich der Systemdruck entsprechend dem Kennfeld 31 als Grundsystemdruck einstellen.

Das Lenkdruck-Kennfeld 31 stellt den minimal erforderlichen Systemdruck dar, der bei den jeweiligen Fahrzeuggeschwindigkeiten bei einem Fahrzeug ohne Belastung zur Verstellung der Lenkachsen (ohne Regelfehler Δ φ ) erforderlich ist unter Berücksichtigung der auftretenden Druckabfälle am Regelventil bei maximaler Verstellgeschwindigkeit der Achsen. Das Lenkdruck-Kennfeld ist fahrzeugspezifisch und kann für jeden Fahrzeugtyp und dessen Ausführung ermittelt werden. Dieser minimal erforderliche Systemdruck reicht bei größeren erforderlichen Lenkkräften, die beispielsweise bei beladenen Fahrzeugen, Steigungen, rauhen Bodenverhältnissen, etc. auftreten, für eine Verstellung der Achsen nicht aus, so daß beim Verstellen der Achse kleinere oder größere Regelfehler verbleiben, die eine Systemdruckanhebung erforderlich machen.

Die Auswertung der Lenkfehler wird so vorgenommen, daß aus der Summe der rückgemeldeten Lenkfehler der Achsen 1 bis n der größte Regelfehler ermittelt und wie folgt ausgewertet wird:

| Regelfehler in % vom max. Lenkwinkel | Maßnahme: Erhöhrung des Systemdrucks um ... % von pₘₐₓ (max. Systemdruck) |
|---|---|
| ≦ x 1 % | 0̸ % pₘₐₓ |
| > x 1 % bis ≦ x 2 % | y1 % pₘₐₓ |
| > x 2 % bis ≦ x 3 % | y2 % pₘₐₓ |
| > x 3 | auf pₘₐₓ |

Anzahl der Bewertungen abhängig von Anwendung.

Die hieraus sich ergebende Erhöhung des Systemdrucks wird dem aktuellen Ausgangssignal des Lenkdruck-Kennlinienfeldes additiv zugeschlagen, so daß sich beispielsmäßig ein Kennlinienfeld entsprechend dem Bezugszeichen 32 aus Figur 7 ergibt. In Figur 6 ist die additive Erhöhung im Lenkdruck-Kennfeld schematisch durch die Auswerteeinheit 32 und die Summierschaltung 33 dargestellt.

Allgemein betrachtet ergibt sich dadurch eine Regelfehler bewertete Anhebung des (minimalen) Lenkdruck-Kennfeldes und damit eine Erhöhung des erforderlichen Systemdrucks. Die Korrektur des Systemdrucks wird dabei solange vorgenommen, bis der Lenkfehler zu Null wird bzw. innerhalb einer zulässigen Toleranz liegt. Entsprechend der Druckerhöhung bei größer werdendem Lenkfehler Δ φ erfolgt bei kleiner werdendem Lenkfehler eine Druckreduzierung. Der Druckabbau wird dabei, wie weiter unten genauer dargestellt, aus Stabilitätsgründen zeitlich verzögert über eine Rampenfunktion durchgeführt.

Der erforderliche Lenkdruck steigt mit zunehmender Belastung des Fahrzeugs an. Diese Tatsache kann bereits von vorneherein bei der Bestimmung der erforderlichen Höhe des Systemdrucks (nicht erst über nicht ausregelbare Lageregelabweichungen Δ φ ) zur Erhöhung des Systemdrucks berücksichtigt werden. Dazu wird der Lastzustand ermittelt (Sensoren 29 in Figur 4 oder Figur 6). Der Beladezustand des Fahrzeugs kann dabei über analog arbeitende Kraft- oder Drucksensoren ermittelt werden. Für die Kraftmessung ist sowohl eine Messung der einzelnen Achsbelastung z.B. über Kraftmeßbolzen bzw. Loadcell-Meßverfahren oder die Messung im Belastungs-Schwerpunkt des Fahrzeugs möglich. Der Einsatz der Druckmessung zur Ermittlung des Lastzustandes ist z.B. für Stapler vorgesehen, bei denen sich durch Messung des Hydraulikdrucks im Hubmast-Zylinder auf die jeweilige Belastung schließen läßt. Bei der Ermittlung des Lastzustandes durch eine Druckmessung ist auch der Fall berücksichtigt, daß anstelle eines analog arbeitenden Druckaufnehmers mehrere digital arbeitende Aufnehmer z.B. als Druckschalter eingesetzt werden, die der Reihe nach ansprechen und Druckbelastungsbereiche anzeigen. Der gemessene Lastzustand als Eingangsgröße wird nun wie folgt in einer Auswerteeinheit 34 ausgewertet:

| Last in % von max. Last | Maßnahme: Erhöhung des Systemdruckes um ... % von pₘₐₓ (max. Systemdruck) |
|---|---|
| ≦ L 1 % | 0̸ % pₘₐₓ |
| > L 1 % bis ≦ L 2 % | z1 % pₘₐₓ |
| > L 2 % bis ≦ L 3 % | z2 % pₘₐₓ |
| > L 3 | auf pₘₐₓ |

Anzahl der Bewertungen abhängig von Anwendung.

Die hieraus sich ergebende Erhöhung des Systemdrucks wird dem aktuellen Ausgangssignal des Lenkdruck-Kennlinienfeldes ebenfalls additiv zugeschlagen, was in Figur 6 durch eine Verbindung mit der Summierschaltung 33 dargestellt ist. Allgemein betrachtet ergibt sich dadurch eine lastzustandsbewertete Anhebung des Lenkdruck-Kennfeldes und damit eine Erhöhung des erforderlichen Systemdrucks. Die Korrektur des Systemdrucks wird bei jeder Laständerung vorgenommen. Entsprechend der Druckerhöhung bei größer werdender Last erfolgt bei kleiner werdender Last eine Druckreduzierung.

Wie in Figur 6 dargestellt, ergibt sich nach der Summierung der erforderliche Systemdruck in Abhängigkeit des Lenkdruck-Kennfeldes 31, der Auswertung der Lenkfehler 32 und der Auswertung des Lastzustandes 34. Dieses Signal wird nun in der Rampenfunktionseinheit 30 dynamisch bewertet in der Weise, wenn eine Erhöhung des Systemdrucks erfolgen soll, wird das sofort ohne Verzögerung vorgenommen, soll dagegen der Systemdruck abgesenkt werden, so erfolgt dies entsprechend einer einstellbaren Rampenfunktion zeitlich langsam.

Die Erhöhung von einem Druckwert auf einen anderen erfolgt quasi-linear (in Inkrementen mit vorgegebener Höhe entsprechen der D/A-Wandlung in der Mikrocomputersteuerung).

Nach der dynamischen Bearbeitung in der Rampenfunktionseinheit 30 wird das Signal als Sollwert dem Ventilverstärker 20 des Proprotionaldruckventils 19 vorgegeben. Dieser steuert das Ventil 19 entsprechend an und bewirkt somit eine Veränderung des Systemdrucks.

In Figur 7 ist mit Bezugszeichen 31 das Lenkdruck-Kennfeld für den minimal erforderlichen Systemdruck dargestellt. Daran schließt sich ein Einflußbereich 35 für eine Systemdruckerhöhung durch Regelfehler Δ φ (bei minimalem Belastungszustand) an. Weiter ist ein Einflußbereich 36 über den Lastzustand des Fahrzeugs angegeben.

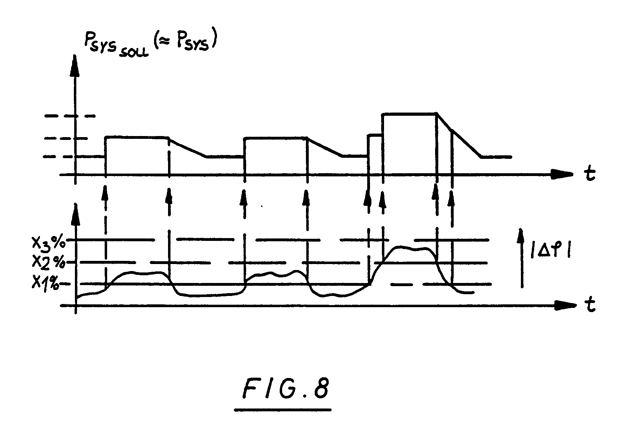

Ein Beispiel für den zeitlichen Verlauf des Systemdrucks bei auftretenden Lenk-Regelfehlern unterschiedlicher Höhe jedoch konstanter Fahrgeschwindigkeit und minimalem Beladungszustand des Fahrzeugs ist in Figur 8 dargestellt.

Eine einfachere Ausführung ergibt sich, wenn anstelle des Lenkdruck-Kennfeldes ein fahrgeschwindigkeitsunabhängiger, konstanter Grundsystemdruck vorgegeben wird, der z.B. im dargestellten Lenkdruck-Kennfeld dem niedrigsten Druckwert entspricht. Die Auswertung der Lenk-Regelfehler und des Lastzustandes wird dabei wie oben angeführt, berücksichtigt. Eine weitere Variante ergibt sich, wenn der Lastzustand unberücksichtigt bleibt und nur das Lenkdruck-Kennfeld und die Auswertung der Lenkregelfehler zur Ermittlung der Systemdruckhöhe verwendet werden. In der einfachsten Form wird ein konstanter Systemdruck vorgegeben und zur Systemdruckanhebung nur der Lenk-Regelfehler berücksichtigt.

## Patentansprüche

1. Lenkachsenregelung mit einem Hydraulik-Antrieb zur Versorgung des Hydraulik-Systems und zur Aufrechterhaltung des Systemdrucks, wobei eine Einrichtung zur Anpassung des Systemdrucks an den auftretenden Lastdruck vorgesehen ist, mit je einem elektro-hydraulischen Achsregler (2) für jede Lenkachse (1), bestehend aus einer hydraulischen Achssteuerung (3) mit einem Antriebselement (6) für die Lenkachse (1) und einem vorgeschalteten Regelventil (8), sowie einem elektrischen Achsregler (4) mit einem Lagesensor (9) zur Ermittlung der Lage der Lenkachse (1) und einem Ist-Sollwert Vergleich, und mit einem nachgeschalteten Lageregler (11) für das Antriebselement (6), der mit einer Einheit (23) zur Sollwert-Vorgabe verbunden ist und mit einem Ventil-Verstärker (12) zur Ansteuerung des Regelventils (8), sowie bestehend aus dem Hydraulik-Antrieb (5) zur Versorgung wenigstens eines elektro-hydraulischen Achsreglers (2), dadurch gekennzeichnet, daß die Anpassung des Systemdrucks (P_{sys}) dadurch erfolgt, daß eine vom Lagesensor (9) erfaßte und vom elektro-hydraulischen Achsregler (2) beim jeweiligen Systemdruck nicht ausregelbare Lage-Regelabweichung (Δφ) der Einrichtung zur Anpassung des Systemdrucks (ELS) als Rückmeldung zugeführt wird und entsprechend der Systemdruck (P_{sys}) solange erhöhbar ist (Ventilverstärker 20, Proportional-Druckventil 19) bis der vorgegebene Lagesollwert erreicht ist.

2. Lenkachsenregelung nach Anspruch 1, dadurch gekennzeichnet, daß ein minimaler Systemdruck, der wenigstens bei möglichen, minimal auftretenden Lenkkräften zur Fahrzeuglenkung erforderlich ist, als Grundsystemdruck bzw. dessen Sollwert vorgegeben wird und von diesem ausgehend eine Systemdruckerhöhung bzw. Sollwert-Erhöhung entsprechend der bewerteten Lage-Regelabweichung ( Δ φ ) vorgenommen wird.

3. Lenkachsenregelung nach Anspruch 2, dadurch gekennzeichnet, daß der durch die Beladung des Fahrzeugs entstehende Lastzustand über Sensoren (29) erfaßt wird und entsprechend eines so ermittelten und bewerteten Lastzustandssignals der vorgegebene Grundsystemdruck additiv erhöht wird.

4. Lenkachsenregelung nach Anspruch 3, dadurch gekennzeichnet, daß die Sensoren (29) zur Ermittlung des Lastzustandes Kraft- und/oder Drucksensoren sind, die an den einzelnen Achsen (1) oder an einem Belastungs-Schwerpunkt oder in einem Hubzylinder angeordnet sind.

5. Lenkachsenregelung nach Anspruch 4, dadurch gekennzeichnet, daß die Sensoren (29) kontinuierlich bzw. belastungsproportional oder digital und in entsprechenden Belastungsstufen ansprechen.

6. Lenkachsenregelung nach einem der Ansprüche 2 bis 5, dadurch gekennzeichnet, daß der Systemdruck als Funktion der Fahrzeuggeschwindigkeit (v) in einem abgespeicherten Lenkdruck-Kennfeld vorgegeben ist und entsprechende Sollwerte für den Systemdruck vorgegeben werden.

7. Lenkachsenregelung nach Anspruch 6, dadurch gekennzeichnet, daß der Systemdruck bei kleiner Fahrzeuggeschwindigkeit hoch ist, bei zunehmender Fahrzeuggeschwindigkeit abfällt und anschließend wieder ansteigt und das Lenkdruck-Kennfeld entsprechend ausgelegt ist.

8. Lenkachsenregelung nach Anspruch 6 oder 7, dadurch gekennzeichnet, daß als Fahrzeuggeschwindigkeitssignal ein über eine Messung ermitteltes Geschwindigkeitssignal zur Ermittlung des Sollwerts für den Systemdruck herangezogen wird.

9. Lenkachsenregelung nach Anspruch 6 oder 7, dadurch gekennzeichnet, daß als Fahrzeuggeschwindigkeitssignal ein Geschwindigkeits-Sollwert-Signal zur Ermittlung des Sollwerts für den Systemdruck herangezogen wird.

10. Lenkachsenregelung nach einem der Ansprüche 1 bis 9, dadurch gekennzeichnet, daß für ein Fahrzeug ohne Lenk- und Fahrauftrag der Sollwert für den Systemdruck auf Null geschaltet ist.

11. Lenkachsenregelung nach einem der Ansprüche 1 bis 10, dadurch gekennzeichnet, daß das Sollwert-Signal für den Systemdruck bzw. für eine Systemdruckerhöhung dynamisch in der Art einer Rampenfunktion (30) bearbeitet wird, wobei eine Erhöhung des Systemdrucks sofort, eine Absenkung des Systemdrucks entsprechend einer einstellbaren Rampenfunktion zeitlich langsam erfolgt, damit Achsregler und ELS sich nicht gegenseitig beeinflussen (aufschaukeln).

12. Lenkachsenregelung nach einem der Ansprüche 1 bis 11, dadurch gekennzeichnet, daß der Betrag der Lage-Regelabweichung als Lageregelfehler ( Δ φ), zweckmäßig in einem Prozentbetrag vom maximalen Lenkwinkel, in einer Betragseinheit (15) gebildet und für die Weiterverarbeitung zur Verfügung gestellt wird.

13. Lenkachsenregelung nach einem der Ansprüche 1 bis 12, dadurch gekennzeichnet, daß bei mehreren Lenkachsen (1) in einer Auswahlschaltung die größte Lage-Regelabweichung ermittelt und zur Systemdruckerhöhung herangezogen wird.

14. Lenkachsenregelung nach einem der Ansprüche 1 bis 13, dadurch gekennzeichnet, daß der Lagesensor (9) als Strecken-oder Winkelaufnehmer an den zugeordneten Lenkachsen (1) oder den entsprechenden Antriebselementen (6) angeordnet ist.

15. Lenkachsenregelung nach einem der Ansprüche 1 bis 14, dadurch gekennzeichnet, daß die Antriebselemente (6) zur Verstellung der Lenkachse (1) hydraulische Zylinder-, Motor- oder Schwenkantriebe sind.

16. Lenkachsenregelung nach einem der Ansprüche 1 bis 15, dadurch gekennzeichnet, daß als Regelventile (8) zur Achslageregelung Regel-, Servo- oder Proportionalwegeventile mit oder ohne Lageregelung des Ventilschiebers in direkt- oder vorgesteuerter Ausführung verwendet werden.

17. Lenkachsenregelung nach einem der Ansprüche 1 bis 16, dadurch gekennzeichnet, daß als Achslageregler (4) analog oder digital arbeitende Regler verwendet werden.

18. Lenkachsenregelung nach einem der Ansprüche 1 bis 17, dadurch gekennzeichnet, daß der Hydraulik-Antrieb (5) als System mit Konstant-Pumpe (18) ausgeführt ist, die einen konstanten Förderstrom abgibt, mit einem elektrisch ansteuerbaren Druckventil (19), das in Abhängigkeit des anliegenden Systemdruck-Sollwerts seinen Einstelldruck ändert und mit einem Ventil-Verstärker (20) zur Ansteuerung des Druckventils (19).

19. Lenkachsenregelung nach Anspruch 18, dadurch gekennzeichnet, daß das Druckventil (19) ein direkt- oder vorgesteuertes Ventil abhängig von maximalen Volumenstrom der Pumpe (18) mit oder ohne Lageregelung für ein Magnetstellsystem ist.

20. Lenkachsenregelung nach einem der Ansprüche 1 bis 17, dadurch gekennzeichnet, daß der Hydraulik-Antrieb (5) als System mit Verstellpumpe (22) ausgeführt ist, mit einer Verstellpumpe mit ansteuerbarer Druckreglerfunktion und einem elektrisch ansteuerbaren Druckventil (19) einschließlich Ventil-Verstärker (20).

21. Lenkachsenregelung nach einem der Ansprüche 1 bis 20, dadurch gekennzeichnet, daß die Sollwert-Vorgabe für den Fahrzeuglenkwinkel als Signal eines Lenkwinkeleinschlages an einem manuell bewegbaren Lenkrad (25) oder als Signal eines Lenkprogramms (24) oder als Signal eines Fahrzeugführungssystems (26) vorgegeben wird und einer Rechnereinheit (23) mit einem Mikrorechner zugeführt wird, die entsprechend den Fahrzeuggegebenheiten die Lage-Sollwert-Signale für die einzelnen Achsregler (2) ermittelt und zur Verfügung stellt.

22. Lenkachsenregelung nach einem der Ansprüche 1 bis 21, dadurch gekennzeichnet, daß eine Rechnereinheit vorgesehen ist mit Eingabe- und Eingangseinheiten für Lenkwinkelvorgaben und Lage-Regelabweichungen ( Δ φ ) und/oder Fahrzeuggeschwindigkeitssignal (v_{Soll}) und/oder Fahrzeugbelastungssignale, mit einer Ausgabe-Einheit für Lagesollwerte für einzelne Lenkachsen und Systemdruck-Sollwerte oder entsprechende Stellsignale, mit wenigstens einer Speichereinheit für Lenkprogramm-Kenndaten und/oder Lenkdruck-Kennfelder (31) und mit einer Recheneinheit zur Berechnung der Lage-Sollwert-Signale und der Systemdruck-Sollwert-Signale bzw. Systemdruckerhöhungssignale einschließlich deren Dynamik.

## Claims

1. Steering-axle regulation with a hydraulic drive for feeding the hydraulic system and for maintaining the system pressure, a device for matching the system pressure to the load pressure occurring being provided, with a respective electrohydraulic axle regulator (2) for each steering axle (1), consisting of a hydraulic axle control (3) with a drive element (6) for the steering axle (1) and of a preceding regulating valve (8) as well as of an electrical axle regulator (4) with a position sensor (9) for determining the position of the steering axle (1) and with an actual/desired-value comparison, and with a following position regulator (11) for the drive element (6), which position regulator is connected to a desired-value presetting unit (23), and with a valve amplifier (12) for activating the regulating valve (8), and consisting of the hydraulic drive (5) for feeding at least one electrohydraulic axle regulator (2), characterized in that the matching of the system pressure (P_{sys}) takes place, in that a position-regulating deviation (Δφ), which is recorded by the position sensor (9) and which cannot be regulated out by the electrohydraulic axle regulator (2) at the respective system pressure, is fed as feedback to the device for matching the system pressure (ELS), and the system pressure (P_{sys}) can be accordingly increased (valve amplifier 20, proportional pressure valve 19) until the predetermined position desired value is reached.

2. Steering-axle regulation according to Claim 1, characterized in that a minimum system pressure, which is necessary for vehicle steering at least in the event of possible minimum steering forces occurring, is preset as a basic system pressure or its desired value, and, starting from this, a system-pressure increase or desired-value increase is carried out according to the evaluated position-regulating deviation (Δφ).

3. Steering-axle regulation according to Claim 2, characterized in that the load state occurring as a result of the loading of the vehicle is recorded via sensors (29) and the preset basic system pressure is increased additively according to a load-state signal thus determined and evaluated.

4. Steering-axle regulation according to Claim 3, characterized in that the sensors (29) for determining the load state are force and/or pressure sensors which are arranged on the individual axles (1) or at a centre of gravity of load or in a lifting cylinder.

5. Steering-axle regulation according to Claim 4, characterized in that the sensors (29) respond continuously or in a load-proportional manner or digitally and in corresponding load steps.

6. Steering-axle regulation according to one of Claims 2 to 5, characterized in that the system pressure is preset as a function of the vehicle speed (v) in a stored family of steering-pressure characteristics and corresponding desired values for the system pressure are preset.

7. Steering-axle regulation according to Claim 6, characterized in that the system pressure is high at a low vehicle speed, falls with an increasing vehicle speed and thereafter rises again, and the family of steering-pressure characteristics is designed accordingly.

8. Steering-axle regulation according to Claim 6 or 7, characterized in that a speed signal determined via a measurement is used as a vehicle-speed signal for determining the desired value for the system pressure.

9. Steering-axle regulation according to Claim 6 or 7, characterized in that a speed desired-value signal is used as a vehicle-speed signal for determining the desired value for the system pressure.

10. Steering-axle regulation according to one of Claims 1 to 9, characterized in that, for a vehicle without a steering and travelling order, the desired value for the system pressure is switched to zero.

11. Steering-axle regulation according to one of Claims 1 to 10, characterized in that the desired-value system for the system pressure or for a system-pressure increase is processed dynamically in the manner of a ramp function (30), an increase in the system pressure taking place immediately and a reduction of the system pressure taking place slowly in time according to an adjustable ramp function, so that the axle regulator and ELS do not influence one another (build up).

12. Steering-axle regulation according to one of Claims 1 to 11, characterized in that the amount of position-regulating deviation is formed as a position-regulating error (Δφ), expediently in a percentage amount of the maximum steering angle, in an amount unit (15) and is provided for further processing.

13. Steering-axle regulation according to one of Claims 1 to 12, characterized in that, with a plurality of steering axles (1), the largest position-regulating deviation is determined in a selection circuit and is used for increasing the system pressure.

14. Steering-axle regulation according to one of Claims 1 to 13, characterized in that the position sensor (9) is arranged as a distance or angle transducer on the associated steering axles (1) or the corresponding drive elements (6).

15. Steering-axle regulation according to one of Claims 1 to 14, characterized in that the drive elements (6) for adjusting the steering axle (1) are hydraulic cylinder, motor or pivoting drives.

16. Steering-axle regulation according to one of Claims 1 to 15, characterized in that regulating, servo-or proportional directional valves with or without a position regulation of the valve slide and of the directly controlled or pilot-controlled type are used as regulating valves (8) for regulating the axle position.

17. Steering-axle regulation according to one of Claims 1 to 16, characterized in that regulators working in the analog or digital mode are used as axle-position regulators (4).

18. Steering-axle regulation according to one of Claims 1 to 17, characterized in that the hydraulic drive (5) is designed as a system with a fixed-displacement pump (18) which emits a constant feed flow, with an electrically activatable pressure valve (19) which changes its set pressure as a function of the applied system-pressure desired value, and with a valve amplifier (20) for activating the pressure valve (19).

19. Steering-axle regulation according to Claim 18, characterized in that the pressure valve (19) is a directly controlled or pilot-controlled valve dependent on the maximum volumetric flow of the pump (18) with or without a position regulation for a magnetic setting system.

20. Steering-axle regulation according to one of Claims 1 to 17, characterized in that the hydraulic drive (5) is designed as a system with a variable-displacement pump (22), with a variable-displacement pump having an activatable pressure-regulator function and with an electrically activatable pressure valve (19) including a valve amplifier (20).

21. Steering-axle regulation according to one of Claims 1 to 20, characterized in that the desired-value presetting for the vehicle-steering angle is preset as a signal of a steering-angle lock on a manually movable steering wheel (25) or as a signal of a steering program (24) or as a signal of a vehicle guidance system (26) and is fed to a computer unit (23) with a microcomputer, which, according to the vehicle conditions, determines the position desired-value signals for individual axle regulators (2) and provides them.

22. Steering-axle regulation according to one of Claims 1 to 21, characterized in that a computer unit is provided, with input and entry units for steering-angle presettings and position-regulating deviations (Δφ) and/or a vehicle-speed signal (V_{Des}) and/or vehicle-load signals, with an output unit for the position desired values for individual steering axles and system-pressure desired values or corresponding set signals, with at least one storage unit for steering-program characteristic data and/or families of steering-pressure characteristics (31), and with a computing unit for computing the position desired-value signals and the system-pressure desired-value signals or system-pressure increase signals including their dynamics.

## Revendications

1. Régulation d'essieu directeur avec un entraînement hydraulique pour alimenter le système hydraulique et pour maintenir la pression du système, une installation étant prévue pour adapter la pression du système à la pression de la charge existante, avec chaque fois un régulateur électro-hydraulique d'essieux (2) pour chaque essieu directeur (1), composé d'une commande d'essieu hydraulique (3) avec un élément d'entraînement (6) de l'essieu directeur (1) et une soupape de régulation (8) en amont ainsi qu'un régulateur d'essieux électrique (4) avec un capteur de position (9) pour déterminer la position de l'essieu directeur (1) ainsi qu'un comparateur valeur réelle valeur de consigne suivi d'un régulateur de position (11) pour l'élément d'entraînement (6) qui est relié à une unité (23) pour prédéterminer la valeur de consigne et un amplificateur de soupape (12) pour commander la soupape de régulation (8) ainsi que d'un entraînement hydraulique (5) pour alimenter au moins un régulateur d'essieux (2) électro-hydraulique, régulation caractérisée en ce que l'adaptation de la pression du système (P_{sys}) se fait en ce qu'une déviation de régulation de position (Δφ) détectée par un capteur de position (9) et qui ne peut pas être éliminée par régulation à la pression respective du système par le régulateur d'essieux électro-hydraulique (2), est reconduit comme signal de réaction à l'installation d'adaptation de la pression du système ELS) et on augmente la pression du système (P_{sys}) de manière correspondante jusqu'à ce que la valeur de consigne de la position prédéterminée soit atteinte (amplificateur de soupape 20, soupape de pression proportionnelle 19).

2. Régulation d'essieu directeur selon la revendication 1, caractérisée en ce qu'il faut une pression minimale dans le système, qui est nécessaire pour le guidage du véhicule, au moins pour les forces de braquage minimales possibles, cette pression étant prédéterminée comme pression de base du système ou sa valeur de consigne et, partant de cette valeur, on augmente la pression du système ou on augmente la valeur de consigne en fonction de la déviation de régulation de position ainsi exploitée (Δφ).

3. Régulation d'essieu directeur selon la revendication 2, caractérisée en ce que l'état de charge résultant de la charge du véhicule est détecté par les capteurs (29) et en fonction d'un signal d'état de charge ainsi déterminé et exploité, on augmente de manière additive la pression de base prédéterminée du système.

4. Régulation d'essieu directeur selon la revendication 3, caractérisée en ce que les capteurs (29) déterminant l'état de charge sont des capteurs de force et/ou de pression qui sont prévus sur les différents essieux (1) ou sur un centre de gravité de charge ou sont associés à un vérin de levage.

5. Régulation d'essieu directeur selon la revendication 4, caractérisée en ce que les capteurs (29) sont sollicités en continu ou proportionnellement à la charge ou de manière numérique et selon les échelons de charge correspondants.

6. Régulation d'essieu directeur selon l'une des revendications 2 à 5, caractérisée en ce que la pression du système est prédéterminée comme fonction de la vitesse du véhicule (v) prédéterminée dans un champ de caractéristiques de pression de braquage mis en mémoire, et des valeurs de consigne correspondantes sont prédéterminées pour la pression du système.

7. Régulation d'essieu directeur selon la revendication 6, caractérisée en ce que la pression du système est élevée aux faibles vitesses du véhicule et cette pression diminue en fonction de la vitesse du véhicule pour augmenter de nouveau et le champ de caractéristiques de pression de braquage est conçu de manière correspondante.

8. Régulation d'essieu directeur selon la revendication 6 ou 7, caractérisée en ce que le signal de vitesse de déplacement du véhicule est un signal de vitesse déterminé par une mesure pour déterminer la valeur de consigne de la pression du système.

9. Régulation d'essieu directeur selon la revendication 6 ou 7, caractérisée en ce que le signal de vitesse du véhicule est un signal de valeur de consigne de vitesse pour déterminer la valeur de consigne de la pression du système.

10. Régulation d'essieu directeur selon les revendications 1 à 9, caractérisée en ce que, pour un véhicule sans mission de direction ou de marche, la valeur de consigne de la pression du système est égale à 0.

11. Régulation d'essieu directeur selon les revendications 1 à 10, caractérisée en ce que le signal de valeur de consigne de la pression du système ou pour une augmentation de la pression du système est traité de manière dynamique dans une fonction de type rampe (30), une augmentation de la pression du système se faisant immédiatement et une diminution de la pression du système se faisant lentement dans le temps, selon une fonction de rampe réglable, pour que le régulateur d'essieux et le moyen ELS ne s'influencent pas réciproquement (mise en oscillation).

12. Régulation d'essieu directeur selon les revendications 1 à 11, caractérisée en ce que l'amplitude de la déviation de régulation de position est formée comme erreur de régulation de position Δφ, de préférence selon un pourcentage de l'angle de braquage maximal dans une unité d'exploitation (15) pour être fourni pour la suite du traitement.

13. Régulation d'essieu directeur selon les revendications 1 à 12, caractérisée en ce que, dans le cas de plusieurs essieux directeurs (1) dans un circuit d'exploitation, on détermine la plus grande déviation de régulation de position et on l'utilise pour augmenter la pression du système.

14. Régulation d'essieu directeur selon les revendications 1 à 13, caractérisée en ce que le capteur de position (9) est un capteur de course ou d'angle sur les essieux directeurs (1) associés ou sur les éléments d'entraînement correspondants (6).

15. Régulation d'essieu directeur selon les revendications 1 à 14, caractérisée en ce que les éléments d'entraînement (6) pour commander l'essieu directeur (1) sont des vérins hydrauliques, des entraînements à moteur ou des entraînements pivotants.

16. Régulation d'essieu directeur selon les revendications 1 à 15, caractérisée en ce que, comme soupape de régulation (8) pour la régulation de la position de l'essieu, on utilise des soupapes de régulation, des soupapes d'asservissement ou des soupapes proportionnelles avec ou sans régulation de position du tiroir de la soupape dans une réalisation directe ou à commande préalable.

17. Régulation d'essieu directeur selon les revendications 1 à 16, caractérisée en ce que, comme régulateur d'essieux (4), on utilise un régulateur à fonctionnement analogique ou numérique.

18. Régulation d'essieu directeur selon les revendications 1 à 17, caractérisée en ce que l'entraînement hydraulique (5) est un système à pompe à débit constant (18) qui fournit un débit constant avec une soupape de pression (19) à commande électrique qui, en fonction de la valeur de consigne de la pression du système appliquée, modifie sa pression de réglage et avec un amplificateur de soupape (20) pour commander la soupape de pression (19).

19. Régulation d'essieu directeur selon la revendication 18, caractérisée en ce que la soupape de pression (19) est une soupape à commande directe ou à commande préalable en fonction du débit volumique maximum de la pompe (18) avec ou sans régulation de position pour un système de réglage magnétique.

20. Régulation d'essieu directeur selon les revendications 1 à 17, caractérisée en ce que l'entraînement hydraulique (5) est un système à pompe reglable (22) avec une pompe réglable à fonction de régulation de pression commandée et une soupape de pression (19) à commande électrique y compris un amplificateur de soupape (20).

21. Régulation d'essieu directeur selon les revendications 1 à 20, caractérisée en ce que la valeur de consigne prédéterminée de l'angle de braquage du véhicule est prédéterminée comme signal d'un braquage de direction sur une roue de direction (25) mobile manuellement ou comme signal d'un programme de direction (24) ou comme signal d'un système de guidage d'un véhicule (26) et est fourni à une unité de calcul (23) avec un microcalculateur qui, en fonction des paramètres du véhicules, détermine les signaux de valeur de consigne de position pour les différents régulateurs d'essieux (2) et fournit ces signaux.

22. Régulation d'essieu directeur selon les revendications 1 à 21, caractérisée par une unité de calcul avec des unités d'entrée et d'introduction pour prédéterminer l'angle de braquage et les déviations de régulation de position (Δφ) et/ou le signal de vitesse du véhicule (v_{cons}) et/ou les signaux de charge du véhicule, avec une unité de sortie pour les valeurs de consigne de position destinées aux différents essieux directeurs et des valeurs de consigne de pression de système ou des signaux de réglage correspondants, avec au moins une unité de mémoire pour les données caractéristiques du programme de direction et/ou un champ de caractéristiques de la pression de direction (31) et avec une unité de calcul pour calculer les signaux de valeur de consigne de position et les signaux de valeur de consigne de pression du système ou des signaux d'augmentation de la pression du système y compris leur dynamique.
